(19) Europäisches Patentamt / European Patent Office / Office européen des brevets

(11) **EP 4 134 398 B1**

(12) **EUROPEAN PATENT SPECIFICATION**

(45) Date of publication and mention of the grant of the patent:
**10.12.2025 Bulletin 2025/50**

(21) Application number: **21785556.8**

(22) Date of filing: **05.04.2021**

(51) International Patent Classification (IPC):
**C08K 7/00** *(2006.01)*      **C08L 101/00** *(2006.01)*
**C08J 5/18** *(2006.01)*       **C09K 5/14** *(2006.01)*
**B29C 43/14** *(2006.01)*      **C08K 3/013** *(2018.01)*
**C08K 3/22** *(2006.01)*       **C08K 3/38** *(2006.01)*
**B29C 43/58** *(2006.01)*      **C08J 3/24** *(2006.01)*
**C08L 63/00** *(2006.01)*      **B29C 43/00** *(2006.01)*
**B29K 105/16** *(2006.01)*     **B29L 7/00** *(2006.01)*
**B29L 31/18** *(2006.01)*

(52) Cooperative Patent Classification (CPC):
(C-Sets available)
**C09K 5/14; B29C 43/003; B29C 43/14;**
**B29C 43/58; C08J 3/244; C08J 5/18; C08K 3/22;**
**C08K 3/38;** B29C 2043/5816; B29K 2105/16;
B29K 2995/0013; B29L 2007/002; B29L 2031/18;
C08J 2363/00; C08K 2003/2227;          (Cont.)

(86) International application number:
**PCT/JP2021/014448**

(87) International publication number:
**WO 2021/206038 (14.10.2021 Gazette 2021/41)**

(54) **METHOD FOR PRODUCING RESIN COMPOSITION LAYER AND METHOD FOR PRODUCING A COMPOSITE MOLDED ARTICLE INCLUDING SAID RESIN COMPOSITION LAYER**

VERFAHREN ZUR HERSTELLUNG EINER HARZZUSAMMENSETZUNGSSCHICHT UND VERFAHREN ZUR HERSTELLUNG EINES VERBUNDFORMARTIKELS MIT BESAGTER HARZZUSAMMENSETZUNGSSCHICHT

PROCÉDÉ POUR LA PRODUCTION D'UNE COUCHE DE COMPOSITION DE RÉSINE ET PROCÉDÉ POUR LA PRODUCTION D'UN ARTICLE MOULÉ COMPOSITE COMPRENANT LADITE COUCHE DE COMPOSITION DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2020 JP 2020069766**

(43) Date of publication of application:
**15.02.2023 Bulletin 2023/07**

(73) Proprietor: **Mitsubishi Chemical Corporation**
**Chiyoda-ku**
**Tokyo 100-8251 (JP)**

(72) Inventors:
• **SAWAMURA, Toshiyuki**
  **Tokyo 100-8251 (JP)**
• **KOGA, Yuuya**
  **Tokyo 100-8251 (JP)**
• **TANAKA, Toshiyuki**
  **Tokyo 100-8251 (JP)**
• **WATANABE, Akira**
  **Tokyo 100-8251 (JP)**

(74) Representative: **Hoffmann Eitle**
**Patent- und Rechtsanwälte PartmbB**
**Arabellastraße 30**
**81925 München (DE)**

(56) References cited:
**WO-A1-2019/176074      WO-A1-2019/189746
JP-A- 2016 079 304      JP-B2- 5 679 083**

(52) Cooperative Patent Classification (CPC): (Cont.)
C08K 2003/385

C-Sets
**C08K 3/22, C08L 63/00;
C08K 3/38, C08L 63/00**

**Description**

Technical Field

The present invention relates to a method for producing a resin composition layer and also relates to a resin composition layer produced by the method and to a composite molded article including the resin composition layer. The resin composition layer, which is produced by the method of the present invention for producing a resin composition layer, and the composite molded article are suitable for use, for example, as heat dissipation materials for power semiconductor devices.

Background Art

Many studies have been conducted regarding heat dissipation sheets having good thermal conductivity and excellent insulating properties. In particular, attempts are continuously being made to mix a filler with a resin, thereby obtaining a heat dissipation resin sheet that satisfies high levels of thermal conductivity and insulating properties. Various oxides and nitrides have been used as the filler that is included in a heat dissipation resin sheet, and many studies have been conducted on particle sizes, particle size distributions, and the like of the oxides and nitrides.

In the related art, studies are being conducted regarding the use of hexagonal boron nitride as the filler that is included in heat dissipation sheets. Hexagonal boron nitride is typically a crystal having a thin plate-like shape and exhibits high thermal conductivity in a planar direction of the thin plate; however, the thermal conductivity is low in a thickness direction of the thin plate. Accordingly, in instances where boron nitride having a thin plate-like shape is included in a heat dissipation sheet, the sheet does not have sufficient thermal conductivity in a thickness direction thereof, because, when formed into the sheet, the boron nitride is oriented in parallel to a surface of the sheet.

Agglomerated boron nitride fillers are materials that increase the thermal conductivity in a thickness direction of the sheet. Using an agglomerated boron nitride filler can improve the thermal conductivity in a thickness direction of the sheet.

Agglomerated boron nitride fillers that have been developed include agglomerated boron nitride fillers having a card-house structure (see Patent Literature 1, for example). Furthermore, agglomerated boron nitride fillers that have been developed include those having a card-house structure that have a relatively large average particle size and are less likely to collapse even when a pressure is applied thereto (see Patent Literature 2, for example). In instances where an agglomerated boron nitride filler having a card-house structure is included in a heat dissipation sheet, the sheet has excellent thermal conductivity in a thickness direction thereof. This is because a thermal conduction path due to the card-house structure is ensured.

Agglomerated boron nitride fillers include boron nitride particles that are agglomerated without the use of a binder. Accordingly, even if an external force is applied during the formation of a sheet, the card-house structure does not collapse easily and maintains the thermal conduction path; accordingly, heat can be dissipated in a thickness direction of the sheet, and excellent thermal conductivity can be achieved (see Patent Literature 3, for example).

One known molding method for increasing the thermal conductivity in a thickness direction of a sheet is a method in which a sheet is configured such that agglomerated boron nitride filler particles therein are in surface contact with one another so as to increase thermal conductivity (see Patent Literature 4, for example).

In Patent Literature 1 to 4, a thermosetting resin composition including an agglomerated boron nitride filler is coated onto a substrate and subjected to heat and pressure to form an agglomerated boron nitride filler-containing resin composition layer. However, no detailed discussion of pressing process conditions and pressing steps is provided.

Patent Literature 5 discloses that coated layers made of a resin composition including a boron nitride filler and alumina are dried and laminated on each other with a heat and pressure process to form a resin sheet that is in a B-stage state, and the resin sheet that is in a B-stage state is held between copper foils to form a cured product of a resin sheet stack that is in a C-stage state and has copper foils disposed on both surfaces.

PTL 1: JP 5679083 B
PTL 2: JP 2016-135730 A
PTL 3: WO 2015/119198 A1
PTL 4: WO 2019/189746 A1
PTL 5: JP 2016-79304 A

In the agglomerated boron nitride fillers disclosed in Patent Literature 1 to 3, small voids remain between filler particles in some cases, and, therefore, there is a need for further improvement in insulating properties.

In Patent Literature 4, there is no discussion of ease of handling of a sheet, and there is a need to improve the ease of handling so that an increased area can be achieved.

According to Patent Literature 5, the pressing pressure at the B stage is low so that a flowability of the sheet can be obtained; consequently, voids remain in the sheet, which results in a low withstand voltage. Regarding Patent Literature 5, the remaining voids embrittle the sheet, and, to achieve an increased area, ease of handling needs to be further improved.

Summary of Invention

An object of the present invention is to provide a method for producing a resin composition layer; with the method, in the production of the resin composition layer, which is formed with a resin composition including an agglomerated inorganic filler and a thermosetting resin, ease of handling of a sheet formed with the resin composition is improved so that breakage and defects of a film due to handling can be reduced, and the method can improve the withstand voltage, adhesion, and heat resistance of the resin composition layer.

The present inventors discovered that the object described above can be achieved by performing specific pressing steps in a method for producing a resin composition layer that includes an agglomerated inorganic filler and a thermosetting resin.

The present invention provides a method for producing a resin composition layer, which is defined in claims 1 to 12.

The present invention further provides a method for producing a composite molded article, the method being a method for producing a composite molded article including a resin composition layer and a metal portion, the method comprising forming the resin composition layer in accordance with the method for producing a resin composition layer according to any one of claims 1 to 12.

Advantageous Effects of Invention

In the present invention, in the production of a resin composition layer including an agglomerated inorganic filler and a thermosetting resin, specific pressing steps are performed, and as a result, ease of handling of a sheet formed with a resin composition is improved so that breakage and defects of a film due to handling can be reduced, and the withstand voltage, adhesion, and heat resistance of the resulting resin composition layer can be improved. In addition, the improvement in adhesion can be expected to reduce thermal resistance at interfaces.

Description of Embodiments

Embodiments of the present invention will be described in detail below. The present invention is not limited to the embodiments described below, and various modifications can be made within the scope of the gist of the present invention.

[Method for Producing the Resin Composition Layer]

A method for producing a resin composition layer of the present invention is a method in which the resin composition layer is formed of a resin composition that includes an agglomerated inorganic filler and a thermosetting resin, and the method comprises step (a) and step (b), described below:

(a) a step in which a pressing process is performed on a carrier film and a sheet formed with the resin composition on the carrier film, under conditions including a pressing temperature of 0°C or greater and 110°C or less and a pressing pressure of 40 MPa or greater and 1000 MPa or less; and

(b) a step in which a pressing process is performed on the sheet resulting from step (a), under conditions including a pressing temperature of 70°C or greater and 250°C or less and a pressing pressure of 3 MPa or greater and 100 MPa or less, to produce the resin composition layer.

In the following description, a resin composition layer produced by the method of the present invention for producing a resin composition layer may be referred to as a "resin composition layer of the present invention". Furthermore, a resin composition for forming the resin composition layer of the present invention, which is a resin composition including an agglomerated inorganic filler and a thermosetting resin, may be referred to as a "resin composition of the present invention".

In the present invention, a "sheet" is a film-like member formed from the resin composition of the present invention on a carrier film and is distinguished from the resin composition layer of the present invention, which is produced by curing the film-like member.

The method of the present invention for producing a resin composition layer may include one or more other steps in addition to step (a) and step (b) mentioned above. For example, the other steps may each intervene between step (a) and step (b). For example, a drying step, a smoothing step, a stacking step, and the like may be included.

In the method of the present invention for producing a resin composition layer, the sheet formed on a carrier film is subjected to pressing steps to form the resin composition layer of the present invention. The resin composition layer of the present invention may be retained on the carrier film to be used in various applications or may be separated from the carrier film to be used as a single body of the resin composition layer in various applications, depending on the applications and the production steps. The resin composition layer of the present invention may be covered with a protective sheet or the like.

One preferred embodiment is a composite molded article including the resin composition layer of the present invention and a metal portion disposed on one or both surfaces of the resin composition layer.

The resin composition of the present invention may include one or more other components in addition to the agglomerated inorganic filler and the thermosetting resin.

[Resin composition]

The resin composition of the present invention will be described.

<Agglomerated Inorganic Filler>

The resin composition of the present invention is one that includes an agglomerated inorganic filler. It is preferable that the resin composition of the present invention include large amounts of the agglomerated inorganic filler so as to improve the thermal conductivity of the resin composition layer that is produced and control a coefficient of linear expansion thereof. A result of the inclusion of the agglomerated inorganic filler is that, in step (a) and step (b), which will be described later, particles of the agglomerated inorganic filler are brought into contact with one another, thereby being deformed, and, consequently, come into surface contact with one another, which results in the formation of a larger number of thermal conduction paths; accordingly, a high thermal conductivity tends to be achieved. The state of agglomeration of the agglomerated inorganic filler can be examined with a scanning electron microscope (SEM).

The resin composition of the present invention may include a non-agglomerated inorganic filler and/or an organic filler, in addition to the agglomerated inorganic filler.

The agglomerated inorganic filler may be one that is electrically insulating, and examples thereof include fillers formed of particles of at least one selected from the group consisting of metal carbides, metal oxides, and metal nitrides.

Examples of the metal carbides include silicon carbide, titanium carbide, and tungsten carbide.

Examples of the metal oxides include magnesium oxide, aluminum oxide, silicon oxide, calcium oxide, zinc oxide, yttrium oxide, zirconium oxide, cerium oxide, ytterbium oxide, and sialons (ceramics made of silicon, aluminum, oxygen, and nitrogen).

Examples of the metal nitrides include boron nitride, aluminum nitride, and silicon nitride.

Since insulating properties are required in power semiconductor applications, it is preferable that the agglomerated inorganic filler be made of an inorganic compound having an excellent insulating property, namely, a volume resistivity of $1 \times 10^{12}$ $\Omega \cdot$cm or greater or, in particular, $1 \times 10^{13}$ $\Omega \cdot$cm or greater. In particular, oxides and nitrides are preferable in terms of a sufficient electrical insulating property of the resin composition layer that is formed.

More specific examples of the agglomerated inorganic filler include those made of alumina ($Al_2O_3$, a volume resistivity of $1 \times 10^{14}$ $\Omega \cdot$cm), aluminum nitride (AlN, a volume resistivity > $1 \times 10^{14}$ $\Omega \cdot$cm), boron nitride (BN, a volume resistivity of $1 \times 10^{14}$ $\Omega \cdot$cm), silicon nitride ($Si_3N_4$, a volume resistivity > $1 \times 10^{14}$ $\Omega \cdot$cm), or silica ($SiO_2$, a volume resistivity > $1 \times 10^{14}$ Q.cm). In particular, the agglomerated inorganic filler is preferably one made of alumina, aluminum nitride, boron nitride, or silica and particularly preferably one made of alumina or boron nitride.

The agglomerated inorganic filler may be one that has been surface treated with a surface treatment agent. The surface treatment agent may be a surface treatment agent known in the art.

One agglomerated inorganic filler may be used alone, or two or more agglomerated inorganic fillers may be combined in any combination in any ratio and used.

The manner and the degree of agglomeration of the agglomerated inorganic filler for use in the present invention are not particularly limited. The following agglomerated boron nitride filler is used as the agglomerated inorganic filler. The following agglomerated boron nitride filler and a filler of a shape and type different from those of the agglomerated boron nitride filler may be used in combination.

<Agglomerated Boron Nitride Filler>

Boron nitride has high thermal conductivity and is flaky. Boron nitride exhibits high thermal conductivity in a planar direction of the flakes while exhibiting low thermal conductivity in a direction perpendicular to the plane. To facilitate handling, it is preferable to use agglomerated particles that are flakes assembled and agglomerated to form a spherical shape. In instances where the agglomerated boron nitride filler particles are layered in a manner similar to that of cabbage, it is preferable to align the particles in a planar direction in a manner such that good thermal conductivity is achieved in a radial direction of the agglomerated particles. It is more preferable that the agglomerated boron nitride filler have a card-house structure.

The "card-house structure" is described, for example, in Ceramics 43 No. 2 (published by The Ceramic Society of Japan in 2008). The card-house structure is a structure in which flaky particles are intricately layered without being oriented. More specifically, the "agglomerated boron nitride filler having a card-house structure" is an agglomerated boron nitride filler that is an assembly of boron nitride primary particles and has a structure in which a planar surface portion of the primary particles and an edge surface portion thereof are in contact with each other to form, for example, a T-shaped associated body.

Preferably, the agglomerated boron nitride filler for use in the present invention is an agglomerated boron nitride filler having the card-house structure described above. Using an agglomerated boron nitride filler having the card-house structure can further increase the thermal conductivity.

A new Mohs hardness of the agglomerated boron nitride filler is not particularly limited and is preferably less than or equal to 5. The lower limit of the new Mohs hardness of the agglomerated boron nitride filler is not particularly specified and is, for example, greater than or equal to 1.

When the new Mohs hardness is less than or equal to 5, the particles dispersed in the resin composition are more likely to have surface contact when the particles come into contact with one another, with the result that thermal conduction paths between the particles are formed, and, consequently, the thermal conductivity of the resin composition layer that is formed tends to be improved.

A volume average particle size of the agglomerated boron nitride filler is not particularly limited and is preferably greater than or equal to 10 $\mu$m and more preferably greater than or equal to 15 $\mu$m. The volume average particle size of the agglomerated boron nitride filler is preferably less than or equal to 100 $\mu$m and more preferably less than or equal to 90 $\mu$m. When the volume average particle size is greater than or equal to 10 $\mu$m, the number of particles in the resin composition and the resin composition layer of the present invention is relatively small, which results in a reduced number of interfaces between the particles and, therefore, reduced thermal resistance; consequently, the resulting resin composition layer may have a high thermal conductivity. When the volume average particle size is less than or equal to either of the upper limits, the resin composition layer that is formed tends to have excellent surface smoothness.

The volume average particle size of the agglomerated boron nitride filler is a particle size corresponding to a cumulative volume of 50% in a cumulative curve drawn based on the volume of the powder subjected to the measurement taken as 100%.

Examples of methods for the measurement include wet measurement in which a measurement is performed with a laser diffraction/scattering particle size distribution analyzer or the like on a sample including agglomerated particles that are dispersed in a pure water medium containing sodium hexametaphosphate as a dispersion stabilizing agent; and dry measurement in which a measurement is performed with a Morphologi, manufactured by Malvern.

The same applies to the volume average particle size of other agglomerated inorganic fillers and non-agglomerated inorganic fillers.

<Break Strength of Agglomerated Inorganic Filler>

A break strength of the agglomerated inorganic filler is not particularly limited and is preferably less than or equal to 300 MPa, more preferably less than or equal to 100 MPa, even more preferably less than or equal to 50 MPa, still more preferably less than or equal to 20 MPa, particularly preferably less than or equal to 15 MPa, and most preferably less than or equal to 10 MPa. When the break strength is less than or equal to any of the upper limits, the agglomerated structure of the agglomerated inorganic filler is deformed when subjected to a pressing process, and, consequently, surface contact between the agglomerated inorganic filler particles is facilitated.

The lower limit of the break strength of the agglomerated inorganic filler is not particularly limited and may be greater than or equal to 2.5 MPa, which is preferable from the standpoint of facilitating handling. The lower limit is more preferably greater than or equal to 3 MPa, even more preferably greater than or equal to 3.5 MPa, and particularly preferably greater than or equal to 4 MPa.

<Modulus of Elasticity of Agglomerated Inorganic Filler>

A modulus of elasticity of the agglomerated inorganic filler is not particularly limited and is preferably greater than or equal to 10 MPa, more preferably greater than or equal to 20 MPa, even more preferably greater than or equal to 30 MPa, still more preferably greater than or equal to 48 MPa, particularly preferably greater than or equal to 50 MPa, and most preferably greater than or equal to 55 MPa. When the modulus of elasticity is greater than or equal to any of the lower limits, the agglomerated inorganic filler is plastically deformed in a direction of a pressing pressure, and, consequently, the collapse of the agglomerated structure tends to be inhibited.

The upper limit of the modulus of elasticity of the agglomerated inorganic filler is not particularly limited and may be less than or equal to 5 GPa, which is preferable from the standpoint of facilitating sufficient deformation. The upper limit is more preferably less than or equal to 2 GPa, even more preferably less than or equal to 1.5 GPa, still more preferably less than or equal to 1 GPa, particularly preferably less than or equal to 500 MPa, more particularly preferably less than or equal to 300 MPa, and most preferably less than or equal to 250 MPa.

When the agglomerated inorganic filler has a modulus of elasticity within any of the above-mentioned ranges, the agglomerated inorganic filler tends to easily maintain a spherical shape during a pressing process. When the break strength of the agglomerated inorganic filler is within any of the above-mentioned ranges, portions at which particles of the agglomerated inorganic filler are in contact with one another are deformed, which tends to facilitate surface contact. As a result, contact thermal resistance at interfaces between agglomerated inorganic filler particles and interfaces between a metal portion, which will be described later, and the resin composition layer of the present invention is reduced while a high thermal conductivity of an interior of the agglomerated inorganic filler is maintained, and, consequently, the overall thermal conductivity is improved.

In instances where the agglomerated inorganic filler is present in the resin composition layer, the break strength and the modulus of elasticity of the agglomerated inorganic filler can be measured after the agglomerated inorganic filler is extracted by calcining and removing the resin of the resin composition layer in a manner that does not denature the agglomerated inorganic filler.

<Content of Agglomerated Inorganic Filler>

A content of the agglomerated inorganic filler in the resin composition layer of the present invention is preferably greater than or equal to 30 mass%, more preferably greater than or equal to 40 mass%, even more preferably greater than or equal to 45 mass%, and particularly preferably greater than or equal to 50 mass%, based on the total mass of the resin composition layer. Furthermore, the content is preferably less than or equal to 99 mass%, more preferably less than or equal to 90 mass%, even more preferably less than or equal to 85 mass%, and particularly preferably less than or equal to 80 mass%.

The combination of the upper and lower limits of the content of the agglomerated inorganic filler in the resin composition layer of the present invention is not particularly limited and is preferably 30 mass% or greater and 99 mass% or less, more preferably 40 mass% or greater and 90 mass% or less, and particularly preferably 50 mass% or greater and 80 mass% or less.

Accordingly, a content of the agglomerated inorganic filler in the resin composition of the present invention, based on the total mass of the solids in the resin composition, is preferably greater than or equal to 30 mass%, more preferably greater than or equal to 40 mass%, even more preferably greater than or equal to 45 mass%, and particularly preferably greater than or equal to 50 mass%, and the content is preferably less than or equal to 99 mass%, more preferably less than or equal to 90 mass%, even more preferably less than or equal to 85 mass%, and particularly preferably less than or equal to 80 mass%.

The combination of the upper and lower limits of the content of the agglomerated inorganic filler in the resin composition layer of the present invention is not particularly limited and is preferably 30 mass% or greater and 99 mass% or less, more preferably 40 mass% or greater and 90 mass% or less, and particularly preferably 50 mass% or greater and 80 mass% or less.

As used herein, the "solids in the resin composition" is the total of all components other than solvents in the resin composition.

When the content of the agglomerated inorganic filler is greater than or equal to any of the lower limits, a thermal-conductivity-improving effect and a coefficient-of-linear-expansion-controlling effect due to the inclusion of the agglomerated inorganic filler tend to be sufficiently achieved. When the content of the agglomerated inorganic filler is less than or equal to any of the upper limits, voids in the resin composition layer can be reduced, and, therefore, insulating properties and interfacial adhesion, which is associated with the composite molded article, tend to be improved.

<Optional Non-agglomerated Inorganic Filler>

In the present invention, a non-agglomerated inorganic filler, which is optional, may be used in addition to the agglomerated inorganic filler.

The non-agglomerated inorganic filler may have a shape that is not limited and may be a spherical shape, a whisker shape, a fiber shape, a plate shape, or the like.

The optional non-agglomerated inorganic filler may be, for example, flaky primary particles of boron nitride, and the shape is not limiting.

One optional non-agglomerated inorganic filler (unagglomerated inorganic filler) may be used alone, or two or more optional non-agglomerated inorganic fillers may be combined in any combination in any ratio and used.

<Spherical Filler>

A preferred unagglomerated inorganic filler that may be used in addition to the agglomerated inorganic filler is a spherical filler.

A thermal conductivity of the spherical filler is not particularly limited and may be greater than or equal to 1 W/m·K. The thermal conductivity is preferably greater than or equal to 10 W/m·K, more preferably greater than or equal to 15 W/m·K, and even more preferably greater than or equal to 20 W/m·K, for example, 20 to 30 W/m·K.

Preferably, the spherical filler has a new Mohs hardness of greater than or equal to 3.1, for example, 5 to 10.

Using such a spherical filler in combination with the agglomerated inorganic filler described above enhances adhesive strength with respect to a metal and heat dissipation properties of the resulting resin composition layer.

As used herein, the "spherical" encompasses shapes that are generally recognized as spherical shapes. For example, an average circularity of 0.4 or greater may be regarded as spherical, or an average circularity of 0.6 or greater may be regarded as a spherical shape. Usually, the upper limit of the average circularity is 1.

The circularity can be measured by image-processing projected images. For example, the circularity can be measured with an FPIA from Sysmex Corporation, or the like.

It is preferable that the spherical filler be at least one selected from the group consisting of spherical fillers of alumina, synthetic magnesite, crystalline silica, aluminum nitride, silicon nitride, silicon carbide, zinc oxide, and magnesium oxide. Using any of these preferred spherical fillers further enhances the heat dissipation properties of the resulting resin composition layer.

It is preferable that a volume average particle size of the spherical filler be within a range of 0.5 $\mu$m or greater and 40 $\mu$m or less. It is believed that when the volume average particle size is greater than or equal to 0.5 $\mu$m, the resin and the filler can easily flow during the heat molding, and, consequently, interfacial adhesive strength of the composite molded article of the present invention, which will be described later, is enhanced. When the volume average particle size is less than or equal to 40 $\mu$m, dielectric breakdown properties of the resin composition layer can be easily maintained.

<Content of Optional Non-agglomerated Inorganic Filler>

In instances where an optional non-agglomerated inorganic filler is used in combination with the agglomerated inorganic filler, a content ratio between the agglomerated inorganic filler and the optional non-agglomerated inorganic filler, in the resin composition of the present invention and the resin composition layer of the present invention, is not particularly limited and is preferably 99:1 to 1:99 and more preferably 95:5 to 9:91, on a mass basis.

A total content of the agglomerated inorganic filler and the optional non-agglomerated inorganic filler in the resin composition layer of the present invention, based on the total mass of the resin composition layer, is preferably greater than or equal to 30 mass%, more preferably greater than or equal to 40 mass%, even more preferably greater than or equal to 45 mass%, and particularly preferably greater than or equal to 50 mass%, and the total content is preferably less than or equal to 99 mass%, more preferably less than or equal to 90 mass%, even more preferably less than or equal to 85 mass%, and particularly preferably less than or equal to 80 mass%. These contents are preferred for similar reasons to those of the content of the agglomerated boron nitride filler in the resin composition layer of the present invention.

Accordingly, a total content of the agglomerated inorganic filler and the optional non-agglomerated inorganic filler in the resin composition of the present invention, based on the total mass of the solids in the resin composition, is preferably greater than or equal to 30 mass%, more preferably greater than or equal to 40 mass%, even more preferably greater than or equal to 45 mass%, and particularly preferably greater than or equal to 50 mass%, and the total content is preferably less than or equal to 99 mass%, more preferably less than or equal to 90 mass%, even more preferably less than or equal to 85 mass%, and particularly preferably less than or equal to 80 mass%.

When the total content of the agglomerated inorganic filler and the optional non-agglomerated inorganic filler is greater than or equal to any of the lower limits, a thermal-conductivity-improving effect and a coefficient-of-linear-expansion-controlling effect due to the inclusion of the inorganic fillers tend to be sufficiently achieved. When the total content of the agglomerated inorganic filler and the optional non-agglomerated inorganic filler is less than or equal to any of the upper limits, voids can be reduced, and, therefore, insulating properties and interfacial adhesion, which is associated with the composite molded article, tend to be improved.

<Optional Organic Filler>

The resin composition and the resin composition layer of the present invention may include an organic filler in addition to the agglomerated inorganic filler. In the present invention, the "organic filler" is a component that is formed of an organic component and is solid at room temperature. The organic filler contains no epoxy groups and does not fall within the definition of a heat-curing catalyst. Examples of the organic filler include natural products such as wood flour, optionally modified cellulose, starch, various organic pigments, thermoplastic resins, and thermosetting resins. Specific examples include acrylic resin particles, nylon resin particles, polyester resin particles, polystyrene resin particles, and silicone resin particles.

In the instance where an organic filler is included, appropriate stretchability may be imparted to the resin composition, which may mitigate a stress that is generated and, therefore, may inhibit the occurrence of cracking in a temperature cycle test.

The upper limit of an average particle size of the organic filler is preferably less than or equal to 100 $\mu$m and more preferably less than or equal to 50 $\mu$m. When the average particle size is less than or equal to either of the upper limits, a decrease in the thermal conductivity can be inhibited, and resin composition layers of various thicknesses can be created. The average particle size of the organic filler is also a volume average particle size determined from the results of a particle size distribution measurement on a volume average basis, which is performed with a laser diffraction particle size distribution analyzer.

One organic filler may be used alone, or two or more organic fillers may be combined in any combination in any ratio and used.

<Thermosetting Resin>

The thermosetting resin to be included in the resin composition of the present invention is not particularly limited as long as the thermosetting resin is one that can be cured in the presence of a curing agent or a curing catalyst to form a cured product.

Specific examples of the thermosetting resin include epoxy resins, phenolic resins, polycarbonate resins, unsaturated polyester resins, cyanate resins, maleimide resins, urethane resins, melamine resins, and urea resins. Among these, epoxy resins are preferable from the standpoint of viscosity, heat resistance, hygroscopicity, and ease of handling. Examples of the epoxy resins include epoxy-group-containing silicon compounds, aliphatic epoxy resins, bisphenol A- or bisphenol F-type epoxy resins, novolac-type epoxy resins, cycloaliphatic epoxy resins, glycidyl ether-type epoxy resins, glycidyl ester-type epoxy resins, glycidyl amine-type epoxy resins, polyfunctional epoxy resins, and polymeric epoxy resins.

<Epoxy Resin>

The "epoxy resin" is a general term that refers to a compound containing at least one oxirane ring (epoxy group) in the molecule.

The oxirane ring (epoxy group) present in the epoxy resin may be either a cycloaliphatic epoxy group or a glycidyl group. It is preferable, from the standpoint of a reaction rate or heat resistance, that the oxirane ring be a glycidyl group.

The epoxy resin for use in the present invention may be an aromatic-oxirane-ring (epoxy group)-containing compound. Specific examples thereof include bisphenol-type epoxy resins derived from glycidylation of a bisphenol, such as bisphenol A, bisphenol F, bisphenol AD, bisphenol S, tetramethylbisphenol A, tetramethylbisphenol F, tetramethylbisphenol AD, tetramethylbisphenol S, or tetrafluorobisphenol A; biphenyl-type epoxy resins; epoxy resins derived from glycidylation of a divalent phenol, such as dihydroxynaphthalene or 9,9-bis(4-hydroxyphenyl)fluorene; epoxy resins derived from glycidylation of a trisphenol, such as 1,1,1-tris(4-hydroxyphenyl)methane; epoxy resins derived from glycidylation of a tetrakisphenol, such as 1,1,2,2-tetrakis(4-hydroxyphenyl)ethane; and novolac-type epoxy resins derived from glycidylation of a novolac, such as phenolic novolac, cresol novolac, bisphenol A novolac, or brominated bisphenol A novolac.

The epoxy resin that is included in the resin composition of the present invention is not particularly limited. For example, it is preferable that the epoxy resin include one or more selected from the following epoxy resins: various bisphenol-type epoxy resins derived from glycidylation of a bisphenol, such as a bisphenol A-type epoxy resin or a bisphenol F-type epoxy resin; various biphenyl-type epoxy resins derived from glycidylation of a biphenyl, aliphatic epoxy resins, epoxy resins derived from glycidylation of an aromatic compound having multiple hydroxy groups, such as dihydroxynaphthalene or 9,9-bis(4-hydroxyphenyl)fluorene, epoxy resins derived from glycidylation of a trisphenol, such as 1,1,1-tris(4-hydroxyphenyl)methane, epoxy resins derived from glycidylation of a tetrakisphenol, such as 1,1,2,2-tetrakis(4-hydroxyphenyl)ethane; novolac-type epoxy resins derived from glycidylation of a novolac, such as phenolic novolac, cresol novolac, bisphenol A novolac, or brominated bisphenol A novolac; and silicone-containing epoxy resins.

In the present invention, one epoxy resin may be used, or two or more epoxy resins may be used in combination.

A molecular weight of the epoxy resin for use in the present invention is not particularly limited.

From the standpoint of film forming ability, low hygroscopicity, and flexibility, it is preferable that the epoxy resin for use in the present invention include a high-molecular-weight epoxy resin. Specifically, the high-molecular-weight epoxy resin is preferably an epoxy resin having a weight average molecular weight of greater than or equal to 10,000 and more preferably an epoxy resin having a weight average molecular weight of greater than or equal to 15,000. The high-molecular-weight epoxy resin is preferably an epoxy resin having a weight average molecular weight of less than or equal to 200,000 and more preferably an epoxy resin having a weight average molecular weight of less than or equal to 180,000.

It is preferable that the high-molecular-weight epoxy resin be more hydrophobic. Specifically, it is preferred that an epoxy equivalent weight of the epoxy component be high. Specifically, the epoxy equivalent weight is preferably greater than or equal to 5,000 g/eq and more preferably greater than or equal to 7,000 g/eq and is preferably less than or equal to 100,000 g/eq.

From the standpoint of increasing a storage modulus of the resin composition layer of the present invention, it is preferable that the epoxy resin for use in the present invention include an epoxy resin having a weight average molecular weight of less than or equal to 600 or less than or equal to 550, in particular. The lower limit of the weight average molecular weight of the epoxy resin is not particularly limited and is typically greater than or equal to 100.

It is preferable that the epoxy resin having a weight average molecular weight of less than or equal to 600 for use in the present invention be an epoxy resin containing at least two epoxy groups in the molecule. It is more preferable that a polyfunctional epoxy resin containing at least three epoxy groups in the molecule and having a weight average molecular weight of less than or equal to 600, which will be described later, be included. The epoxy resin having a weight average molecular weight of less than or equal to 600 may be a combination of a polyfunctional epoxy resin containing at least three epoxy groups in the molecule and an epoxy resin containing at most two epoxy groups in the molecule.

From the standpoint of film forming ability, coatability, and post-curing heat resistance, it is preferable that the thermosetting resin of the resin composition of the present invention include an epoxy resin having a weight average molecular weight of greater than or equal to 10,000 and an epoxy resin having a weight average molecular weight of less than or equal to 600.

The weight average molecular weight of the epoxy resin is a value determined by gel permeation chromatography using polystyrene calibration standards.

The epoxy equivalent weight of the epoxy resin is defined as the "weight of an epoxy resin containing one equivalent of epoxy groups" and can be measured according to JIS K 7236.

(Polyfunctional Epoxy Resin Having Molecular Weight of Less Than or Equal to 600)

It is more preferable that the thermosetting resin of the resin composition of the present invention include a polyfunctional epoxy resin having a molecular weight of less than or equal to 600 and containing at least three epoxy groups in the molecule.

From the standpoint of increasing the storage modulus of the resin composition layer of the present invention and, in particular, increasing a high-temperature storage modulus thereof, which is important in instances in which large amounts of heat are generated, such as in a power semiconductor, epoxy resins containing at least three oxirane rings (epoxy groups) in the molecule are preferable, and epoxy resins containing at least four oxirane rings (epoxy groups) in the molecule are more preferable. The presence of multiple oxirane rings (epoxy groups), in particular, glycidyl groups, in the molecule improves a crosslink density of the resin composition layer that is formed and, therefore, further increases strength. As a result, in a moisture/reflow test, when an internal stress is generated in the resin composition layer, the resin composition layer can maintain its shape without deforming or breaking, and, consequently, formation of spaces, such as voids, in the resin composition layer can be inhibited.

From the standpoint of increasing the storage modulus of the resin composition layer, it is preferable that the molecular weight of the polyfunctional epoxy resin be less than or equal to 600 or less than or equal to 550. The lower limit of the molecular weight of the polyfunctional epoxy resin is not particularly limited and is typically greater than or equal to 100.

In the instance where a polyfunctional epoxy resin is added, oxirane rings (epoxy groups), which have high polarity, can be introduced at a high density. As a result, effects of physical interactions, such as Van der Waals' forces and hydrogen bonding, increase, which improves adhesion between a metal portion and the resin composition layer in the composite molded article, which will be described later.

In the instance where a polyfunctional epoxy resin is added, the storage modulus of the resin composition layer after thermal curing can be increased. As a result, after the cured product of the resin composition enters irregularities of the metal portion, which is the adhesion object, a strong anchoring effect is produced, which improves adhesion between the metal portion and the resin composition layer.

Specifically, it is preferable that the polyfunctional epoxy resin be an epoxy resin containing at least three epoxy groups. Examples of polyfunctional epoxy resins that may be used include jER630, manufactured by Mitsubishi Chemical Corporation, ELM-434 series and ELM-100 series, manufactured by Sumitomo Chemical Company, Limited, EX-321L, EX-411, and EX-512, manufactured by Nagase ChemteX Corporation, and BATG and PETG, manufactured by Showa Denko K.K.

One polyfunctional epoxy resin may be used alone, or two or more polyfunctional epoxy resins may be used in combination.

<Content of Thermosetting Resin>

In the resin composition layer of the present invention, it is preferable that a major component in the resin component, which does not include the inorganic filler, be a thermosetting resin, and in particular, it is preferable that an epoxy resin be included. As referred to herein, the "major component" is the most abundant component.

In the resin composition layer of the present invention, it is preferable that a thermosetting resin be present in an amount of 5 to 90 mass%, in particular, 10 to 60 mass%, based on the total mass of the resin composition layer. Accordingly, it is preferable that a proportion of the thermosetting resin in the resin composition of the present invention, based on the total mass of the solids, be 5 to 90 mass%, in particular, 10 to 60 mass%. When the content of the thermosetting resin is greater than or equal to either of the lower limits, good moldability is achieved, and when the content is less than or equal to either of the upper limits, contents of the other components can be ensured, and, therefore, thermal conductivity can be increased.

The content of the thermosetting resin in the resin component, which does not include the inorganic filler, in the resin composition layer of the present invention, is not particularly limited and is preferably greater than or equal to 20 mass%, more preferably greater than or equal to 25 mass%, even more preferably greater than or equal to 30 mass%, and particularly preferably greater than or equal to 45 mass%. Accordingly, the content of the thermosetting resin in the portion other than the inorganic filler of the solids of the resin composition of the present invention is preferably greater than or equal to 20 mass%, more preferably greater than or equal to 25 mass%, even more preferably greater than or equal to 30 mass%, and particularly preferably greater than or equal to 45 mass%. The upper limit of the content of the thermosetting resin in the resin component, which does not include the inorganic filler, is 100 mass%, that is, the entirety of the remaining component, other than the inorganic filler, may be constituted by the thermosetting resin.

When the proportion of the thermosetting resin is within any of the above-mentioned ranges, low hygroscopicity, a high modulus of elasticity, and high toughness are achieved, and reaction control is facilitated; consequently, the effects of high reflow resistance, high reliability in a cycle test, and high thermal conductivity tend to be produced.

In the resin component of the resin composition layer of the present invention and the resin composition of the present invention, the content of the high-molecular-weight epoxy resin having a weight average molecular weight of greater than or equal to 10,000, which is a preferred epoxy resin as mentioned above, is preferably greater than or equal to 5 mass% and more preferably greater than or equal to 10 mass% and is preferably less than or equal to 90 mass%.

In the resin component of the resin composition layer of the present invention and the resin composition of the present invention, the content of the epoxy resin having a weight average molecular weight of less than or equal to 600 is preferably greater than or equal to 5 mass% and more preferably greater than or equal to 10 mass% and is preferably less than or equal to 90 mass%.

It is preferable that a content ratio between the high-molecular-weight epoxy resin having a weight average molecular weight of greater than or equal to 10,000 and the epoxy resin having a weight average molecular weight of less than or equal to 600 be 1:18 to 18:1 on a mass basis.

When the content of the high-molecular-weight epoxy resin is greater than or equal to either of the lower limits, the film forming ability of the resin composition of the present invention tends to be improved, and when the content is less than or equal to the upper limit, the resin composition layer of the present invention has excellent strength.

<Other Components>

The resin composition and the resin composition layer of the present invention may include one or more other components in addition to the agglomerated inorganic filler and the thermosetting resin. Examples of the other components include unagglomerated inorganic fillers and organic fillers, mentioned above, and also include the components mentioned below, namely, curing catalysts, curing agents, surface treatment agents, such as silane coupling agents, insulating carbon components, such as reduction agents, viscosity modifiers, dispersing agents, thixotropic agents, flame retardants, coloring agents, organic solvents, and thermoplastic resins.

<Curing Catalyst>

The resin composition of the present invention may include a curing catalyst (heat-curing catalyst) for adjusting, for instance, a curing speed and the physical properties of cured products.

The curing catalyst is not particularly limited and is appropriately selected in accordance with the types of the thermosetting resin and the other components that are used. Specific examples of the curing catalyst include acyclic or cyclic tertiary amines, organophosphorus compounds, quaternary phosphonium salts, and diazabicycloalkenes such as organic acid salts. Further examples of curing catalysts that may be used include organometallic compounds, quaternary ammonium salts, and metal halides. Examples of the organometallic compounds include zinc octoate, tin octoate, aluminum acetylacetonate complexes, gallium acetylacetonate complexes, and imidazoles. In particular, imidazoles are preferable from the standpoint of heat resistance and stability.

These may be used alone or in a combination of two or more.

It is preferable that the curing catalyst be present in an amount of 0.1 to 10 mass%, in particular, 0.1 to 5 mass%, based on the total mass of the portion other than solvents and the inorganic filler of the resin composition of the present invention. When the content of the curing catalyst is greater than or equal to either of the lower limits, the progress of the curing reaction is sufficiently promoted to achieve the curing favorably. When the content of the curing catalyst is less than or equal to either of the upper limits, the curing speed does not become excessively high, which results in good storage stability of the resin composition of the present invention.

When the curing catalyst is a solid, an average particle size thereof is not particularly limited. Preferably, at least one curing catalyst has an average particle size of less than or equal to 15 μm, and more preferably, less than or equal to 10 μm. When the average particle size is less than or equal to either of the upper limits, solubility of the curing catalyst in the resin component is improved, and, therefore, a degree of conversion tends to be improved: in addition, the modulus of elasticity of the resin composition layer that is formed is further increased, and, therefore, a glass transition temperature tends to be increased. Furthermore, dispersibility of the curing catalyst is improved, and, therefore, the storage stability of the resin composition of the present invention tends to be improved. The lower limit of the average particle size of the curing catalyst is not particularly limited.

<Curing Agent>

The resin composition of the present invention may include a curing agent. The curing agent is not particularly limited, and examples thereof include phenolic resins, aliphatic amines, aromatic amines, modified amines, polyamide resins, imidazoles, polymercaptans, polysulfides, acid anhydrides, carboxylic acid-containing compounds, and dicyandiamides.

Among these, for example, phenolic resins, acid anhydrides having an aromatic backbone or an alicyclic backbone, hydrogenated products of the acid anhydrides, and modified products of the acid anhydrides are preferable. In the instance where any of these preferred curing agents is used, the resulting resin composition layer tends to have an excellent balance of heat resistance, moisture resistance, and electrical properties. One curing agent may be used alone, or two or more curing agents may be used in combination.

The phenolic resin for use as the curing agent is not particularly limited. Specific examples of the phenolic resin include phenol novolac, o-cresol novolac, p-cresol novolac, t-butyl phenol novolac, dicyclopentadiene cresol, poly(p-vinylphenol), bisphenol A-type novolac, xylylene-modified novolac, decalin-modified novolac, poly(di-o-hydroxyphenyl) methane, poly(di-m-hydroxyphenyl)methane, and poly(di-p-hydroxyphenyl)methane. In particular, novolac-type phenolic resins, which have a rigid backbone, and phenolic resins having a triazine backbone are preferable in terms of further improving the flexibility and flame retardancy of the resin composition and improving the mechanical properties and heat resistance of the resin composition layer. Phenolic resins having an allyl group are preferable in terms of improving the flexibility of the resin composition of the present invention and improving the toughness of the resin composition layer of the present invention.

Examples of commercially available phenolic resins include MEH-8005, MEH-8000H, and NEH-8015 (all manufactured by Meiwa Plastic Industries, Ltd.), YLH903 (manufactured by Mitsubishi Chemical Corporation), LA-7052, LA-7054, LA-7751, LA-1356, and LA-3018-50P (all manufactured by DIC Corporation), and PSM6200, PS6313, and PS6492 (manufactured by Gun Ei Chemical Industry Co., Ltd.).

The acid anhydrides having an aromatic backbone, hydrogenated products of the acid anhydrides, and modified products of the acid anhydrides for use as the curing agent are not particularly limited. Specific examples thereof include SMA resin EF30 and SMA resin EF60 (both manufactured by Sartomer Japan Inc.), ODPA-M and PEPA (both manufactured by Manac Incorporated), Rikacid MTA-10, Rikacid TMTA, Rikacid TMEG-200, Rikacid TMEG-500, Rikacid TMEG-S, Rikacid TH, Rikacid MH-700, Rikacid MT-500, Rikacid DSDA, and Rikacid TDA-100 (all manufactured by New Japan Chemical Co., Ltd.), and EPICLON B4400 and EPICLON B570 (both manufactured by DIC corporation).

The acid anhydrides having an alicyclic backbone, hydrogenated products of the acid anhydrides, and modified products of the acid anhydrides are preferably acid anhydrides having a polyalicyclic backbone, hydrogenated products of the acid anhydrides, and modified products of the acid anhydrides or are preferably acid anhydrides having an alicyclic backbone produced by an addition reaction between a terpene-containing compound and maleic anhydride, hydrogenated products of the acid anhydrides, and modified products of the acid anhydrides. Specific examples thereof include Rikacid HNA and Rikacid HNA-100 (both manufactured by New Japan Chemical Co., Ltd.) and Epikure YH306 and Epikure YH309 (both manufactured by Mitsubishi Chemical Corporation).

It is preferable that the curing agent be present in an amount of 0 to 70 mass%, in particular, 0 to 55 mass%, based on the total mass of the portion other than solvents and the inorganic filler of the resin composition of the present invention. When the content of the curing agent is greater than or equal to either of the lower limits, a sufficient curing ability can be achieved. When the content of the curing agent is less than or equal to either of the upper limits, the reaction proceeds effectively, which improves the crosslink density, thereby increasing the strength, and, in addition, the film forming ability is improved.

When the thermosetting resin is an epoxy resin, a content of the reactive groups of the curing agent is not particularly limited and may be 0 equivalents relative to the amount of the epoxy groups in the thermosetting resin. The content is preferably greater than or equal to 0.05 equivalents, more preferably greater than or equal to 0.1 equivalents, and even more preferably greater than or equal to 0.15 equivalents. The content of the reactive groups of the curing agent is preferably less than or equal to 2 equivalents and more preferably less than or equal to 1.2 equivalents, relative to the amount of the epoxy groups in the thermosetting resin.

When the content of the reactive groups of the curing agent is greater than or equal to either of the lower limits relative to the amount of the epoxy groups in the thermosetting resin, a decrease in the curing speed is inhibited, therefore, the epoxy groups is unlikely to remain, and, accordingly, the effects of improving the strength of the resin composition layer that is formed and inhibiting the hygroscopicity thereof tend to be produced. When the content of the reactive groups of the curing agent is less than or equal to either of the upper limits relative to the amount of the epoxy groups, the modulus of elasticity of the resin composition layer that is formed tends to be increased.

<Dispersing Agent>

The resin composition of the present invention may include a dispersing agent. In the instance where a dispersing agent is included, the resin composition layer can be formed to be uniform, and, therefore, the thermal conductivity and the dielectric breakdown properties of the resulting resin composition layer may be improved.

It is preferable that the dispersing agent have a hydrogen-atom-containing functional group that has a hydrogen bonding property. In the instance where the dispersing agent has a hydrogen-atom-containing functional group that has a hydrogen bonding property, the thermal conductivity and the dielectric breakdown properties of the resin composition layer that is formed can be further enhanced. Examples of the hydrogen-atom-containing functional group that has a hydrogen bonding property include carboxyl groups (pKa=4), phosphoric acid groups (pKa=7), and phenol groups (pKa=10).

The pKa of the hydrogen-atom-containing functional group that has a hydrogen bonding property is preferably within a range of 2 to 10 and more preferably within a range of 3 to 9. When the pKa is greater than or equal to 2, the dispersing agent has an appropriate acidity range, and, therefore, the reaction of the epoxy resin in the thermosetting resin component may be easily inhibited. Accordingly, in instances where a molded product in an uncured state is stored, the storage stability thereof tends to be improved. When the pKa is less than or equal to 10, functions of the dispersing agent are sufficiently fulfilled, and, therefore, the thermal conductivity and the dielectric breakdown properties of the resin composition layer that is formed tend to be sufficiently enhanced.

It is preferable that the hydrogen-atom-containing functional group that has a hydrogen bonding property be a carboxyl group or a phosphoric acid group. In this instance, the thermal conductivity and the dielectric breakdown properties of the resin composition layer that is formed can be even further enhanced.

Specific examples of the dispersing agent include polyester-based carboxylic acids, polyether-based carboxylic acids, polyacrylic carboxylic acids, aliphatic carboxylic acids, polysiloxane-based carboxylic acids, polyester-based phosphoric acids, polyether-based phosphoric acids, polyacrylic phosphoric acids, aliphatic phosphoric acids, polysiloxane-based phosphoric acids, polyester-based phenols, polyether-based phenols, polyacrylic phenols, and polysiloxane-based phenols. One dispersing agent may be used alone, or two or more dispersing agents may be used in combination.

<Thermoplastic Resin>

The resin composition of the present invention may include a thermoplastic resin. In the instance where a thermoplastic resin is included, appropriate stretchability may be imparted to the resin composition layer that is formed, which may mitigate a stress that is generated and, therefore, may inhibit the occurrence of cracking in a temperature cycle test.

The thermoplastic resin may be any commonly known thermoplastic resin. Specific examples of the thermoplastic resin include vinyl-based polymers, such as polyethylene, polypropylene, polystyrene, polyvinyl chloride, (meth) acrylic resins, ethylene-vinyl acetate copolymers, and ethylene-vinyl alcohol copolymers, polyesters, such as polylactic acid resins, polyethylene terephthalate, and polybutylene terephthalate, polyamides, such as nylon and polyamide amine, polyvinyl acetal resins, such as polyvinyl acetoacetal, polyvinyl benzal, and polyvinyl butyral resins, ionomer resins, polyphenylene ethers, polyphenylene sulfides, polycarbonates, polyetheretherketones, polyacetals, ABS resins, LCPs (liquid crystal polymers), fluororesins, polyurethane resins, silicone resins, various elastomers, and modified products of any of these resins.

The thermoplastic resin may be one that becomes homogeneous in the resin phase of the resin composition layer that is formed or one that is phase-separated therein so that its shape can be recognized. When the thermoplastic resin is one that is phase-separated, the shape of the thermoplastic resin in the resin composition layer may be a particle shape or a fibrous shape. The thermoplastic resin may be present as an organic filler, described above.

<Organic Solvent>

The resin composition of the present invention may include an organic solvent so that coatability in a coating step, which will be described later, can be improved.

Examples of organic solvent that may be included in the resin composition of the present invention include methyl ethyl ketone, cyclohexanone, propylene glycol monomethyl ether acetate, butyl acetate, isobutyl acetate, and propylene glycol monomethyl ether.

One organic solvent may be used alone, or two or more organic solvents may be used in combination.

In the instance where the resin composition of the present invention includes an organic solvent, it is preferable that a content of the organic solvent be such that a concentration of the solids (total of the non-solvent components) in the resin composition of the present invention is greater than or equal to 10 mass%, in particular, greater than or equal to 40 mass%, and less than or equal to 90 mass%, in particular, less than or equal to 80 mass%, from the standpoint of coatability for the coating step.

<Method for Producing Resin Composition>

The resin composition of the present invention can be obtained by homogeneously mixing together, by stirring or kneading, an agglomerated inorganic filler, a thermosetting resin, and one or more other components that are added as necessary. The mixing can be carried out by using a common kneading machine, such as a mixer, a kneader, or a single-screw or twin-screw kneader. Heating may be performed for the mixing, if necessary.

The order of mixing the compounding components is not limited as long as particular problems, such as those associated with a reaction or the formation of precipitates, do not occur. One exemplary method is a method in which a resin liquid is prepared by mixing and dissolving a thermosetting resin component into an organic solvent (e.g., methyl ethyl ketone), and then, an agglomerated inorganic filler and other components that have been thoroughly mixed are added to and mixed with the obtained resin liquid.

[Method for Producing Resin Composition Layer]

The method of the present invention for producing the resin composition layer includes step (a) and step (b).

Possible reasons that the production method of the present invention can produce the effect of improving ease of handling, withstand voltage, adhesion, and heat resistance are as follows.

In step (a), a pressing process is performed at a specific pressing pressure and a specific pressing temperature. This pressing process is performed at a temperature less than a curing temperature of the thermosetting resin present in the resin composition of the present invention, and, therefore, the pressing can be carried out while a degree of conversion of the thermosetting resin is kept at a low level. As a result, the thermosetting resin can easily flow into voids derived from the agglomerated inorganic filler, and, consequently, voids can be reduced. The infiltration of the resin into the voids derived from the agglomerated inorganic filler reduces the brittleness of the resulting resin composition layer and, therefore, improves ease of handling.

In addition, in step (b), a pressing process is performed on the sheet resulting from step (a), at a specific pressing pressure and a specific pressing temperature. The specific pressing process of step (b) is carried out in a state in which the thermosetting resin after step (a) has a degree of conversion kept at a low level. Consequently, adhesion is improved, and in addition, by allowing the reaction after step (b) to proceed sufficiently, withstand voltage and heat resistance are improved.

Furthermore, step (b) is carried out at a pressing temperature greater than that of step (a), and, consequently, the flowability of the thermosetting resin before curing increases, which further reduces voids. With the implementation of step (a) and step (b), the resulting resin composition layer has improved withstand voltage, adhesion, and heat resistance.

<Step (a)>

Step (a) is a step for performing a pressing process on a sheet that is a layer of the resin composition of the present invention formed on a carrier film, and the conditions for the pressing process include a pressing temperature of 0°C or greater and 110°C or less and a pressing pressure of 40 MPa or greater and 1000 MPa or less.

In step (a), the sheet is formed with the resin composition of the present invention on a carrier film, and the pressing process is performed on the sheet having the carrier film, under the specific conditions. Since the pressing process in step (a) is performed with the use of the sheet having the carrier film and the specific conditions, ease of sheet handling before step (b) is improved.

Methods for forming the sheet with the resin composition of the present invention are not particularly limited and may include a method that uses a coating step to form the sheet. In this instance, the resin composition of the present invention may include an organic solvent so that coatability can be improved.

Methods for coating the resin composition of the present invention are not particularly limited. Examples of methods that may be employed include dip coating, spin coating, spray coating, blade coating, and any other method. The coating can be carried out by using a coating device, such as a spin coater, a slit coater, a die coater, or a blade coater. Any of these devices can form a sheet (coated film) having a predetermined film thickness uniformly on the carrier film.

The carrier film to be used is not particularly limited and is desirably one that does not dissolve into the resin composition of the present invention and does not deform significantly at the pressing temperature and the pressing pressure of step (a). Examples thereof include olefinic films, polyester films, such as PET (polyethylene terephthalate) films, polyimide films, and copper materials.

In the instance where the sheet is formed with a resin composition of the present invention that includes an organic solvent, it is preferable that the solvent be removed by a step, such as drying, before the pressing in step (a). A solids concentration of the sheet before the pressing in step (a) is preferably greater than or equal to 95 mass% and more preferably greater than or equal to 98 mass%.

The drying step is not particularly limited. The drying is carried out typically at a temperature of 10 to 150°C, preferably at a temperature of 25 to 120°C, and more preferably at a temperature of 30 to 110°C.

When the drying temperature is less than or equal to any of the upper limits, the curing of the thermosetting resin in the sheet is inhibited, which enables the resin to flow in the subsequent pressing step, and, consequently, the removal of voids tends to be facilitated. When the drying temperature is greater than or equal to any of the lower limits, the organic solvent can be removed effectively.

In instances where the drying is performed at less than 80°C, the drying time is typically 5 minutes to 10 days, preferably 10 minutes to 3 days, more preferably 20 minutes to 1 day, and particularly preferably 30 minutes to 4 hours. In instances where the drying is performed at greater than or equal to 80°C, the drying time is preferably greater than or equal to 1 minute and is preferably less than or equal to 30 minutes, more preferably less than or equal to 20 minutes, even more preferably less than or equal to 15 minutes, and particularly preferably less than or equal to 10 minutes. When the drying time is greater than or equal to the lower limit, the organic solvent can be sufficiently removed, and, consequently, the formation of voids in the sheet due to the remaining solvent tends to be inhibited. When the drying time is less than or equal to any of the upper limits, productivity is improved, and, consequently, the cost of production tends to be reduced.

In step (a), the pressing temperature is 0°C or greater and 110°C or less and preferably 3°C or greater and 100°C or less. More preferably, the pressing temperature is less than 100°C, and even more preferably, less than or equal to 95°C. When the pressing temperature is within any of these ranges, the degree of conversion of the thermosetting resin in step (a) can be kept at a low level, and, consequently, the resulting sheet tends to have excellent ease of handling.

In step (a), the pressing pressure is 40 MPa or greater and 1000 MPa or less. The pressing pressure is preferably greater than or equal to 45 MPa and more preferably greater than or equal to 50 MPa and is preferably less than or equal to 900 MPa, more preferably less than or equal to 700 MPa, and even more preferably less than or equal to 500 MPa. When the pressure is within any of these ranges, voids are reduced, and, consequently, the resulting resin composition layer tends to have good thermal conductivity.

The time for the pressing process of step (a) is not particularly limited. The time is preferably greater than or equal to 1 minute and more preferably greater than or equal to 3 minutes and is preferably less than or equal to 5 hours and more preferably less than or equal to 2 hours.

When the pressing time is within any of these ranges, the resulting sheet tends to have excellent ease of handling and good adhesion to a metal portion.

The thermosetting resin present in the sheet after step (a) has a degree of conversion (which may be hereinafter referred to as a "degree of conversion (A)") that is not particularly limited and is preferably less than 50%. The degree of conversion (A) is more preferably less than or equal to 40%, even more preferably less than or equal to 30%, and particularly preferably less than or equal to 20%. When the degree of conversion (A) of the thermosetting resin is less than or equal to any of the upper limits, the resulting sheet tends to have excellent ease of handling and good adhesion.

The degree of conversion (A) of the thermosetting resin in the sheet is determined as follows. Differential scanning calorimetry (DSC) is performed on the sheet before and after step (a) by heating the sheet from 40°C to 250°C at 10°C/min to determine heat generation amounts of the exothermic peak, and a calculation is performed according to the following equation by using the heat generation amounts.

Degree of conversion (A) (%) = (1 - (heat generation amount after step (a)/heat generation amount before step (a)) $\times$ 100

The sheet after step (a) has a film thickness (Fa) that is not particularly limited. The film thickness is preferably greater than or equal to 10 $\mu$m, more preferably greater than or equal to 20 $\mu$m, and even more preferably greater than or equal to 30 $\mu$m and is preferably less than or equal to 1000 $\mu$m and more preferably less than or equal to 800 $\mu$m. When the film thickness (Fa) of the sheet is greater than or equal to either of the lower limits, insulating properties tend to be achieved. When the film thickness (Fa) is less than or equal to either of the upper limits, thermal resistance tends to be reduced.

The film thickness of the sheet can be measured with a contact or non-contact thickness meter.

The same applies to a film thickness (Fb) of the resin composition layer, which results from step (b).

Preferred processes for the pressing process of step (a) include, but are not limited to, flat pressing, roll pressing, and isostatic pressing.

Specific configurations of a flat press machine for performing the pressing process are not particularly limited. Examples thereof include a machine including a pair of parallel flat plates (press plates) having a mirror-polished, hard chromium coating layer on a surface; a pressure control means for controlling the pressing pressure of the press plates; and a heating means for heating the press plates to a predetermined temperature, the machine being configured to hold a sheet between the pair of press plates and press the sheet from both sides while heating the press plates to a predetermined temperature. In step (a), in the instance where a flat pressing process, which uses highly smooth press plate surfaces for pressing, is performed, a surface of the sheet can be easily smoothed, and, consequently, adhesion between the resin composition layer that is formed and the metal portion tends to be improved.

In the instance where a roll pressing process is performed, smoothing of a surface of the sheet can be carried out in step (a), and, consequently, productivity tends to be improved. Specific configurations of a rolling machine for performing the roll pressing process are not particularly limited. The rolling machine may be any of various rolling machines, such as a type including a pair of nip rolls or a type including multi-stage nip rolls. Examples of the rolling machine for performing the roll pressing process include a machine including preheating rolls for preheating (which need not be included in some cases), at least a pair of nip rolls, and desirably a heating means for heating the nip rolls, the machine being configured to hold a sheet between the pair of nip rolls and press the sheet from both sides to apply a pressure to a surface of the sheet, thereby smoothing the surface.

In the instance where an isostatic pressing process is performed, large-area, high-pressure pressing can be carried out, and, consequently, uneven pressing of a sheet tends to be inhibited. In the isostatic pressing process, more than one sheet can be processed simultaneously, and, consequently, productivity tends to be improved.

Specific configurations of an isostatic pressing machine are not particularly limited. Examples thereof include a machine including a pressure vessel filled with a liquid, such as oil or water, a pressure cylinder for applying a pressure to the liquid, a control means for controlling the pressure that is to be applied to the liquid, and a heating means for heating the liquid to a predetermined temperature. More specific examples thereof include an isostatic pressing machine configured to perform isostatic pressing by immersing a vacuum-packed sheet having a carrier film thereon in a liquid, such as oil or water, of the machine, thereby pressing the sheet at a uniform pressure to smooth a surface of the sheet.

<Step (b) >

Step (b) is a step for performing a pressing process on the sheet resulting from step (a), at a pressing temperature of 70°C or greater and 250°C or less and a pressing pressure of 3 MPa or greater and 100 MPa or less, to produce the resin composition layer.

Methods for performing the pressing process in step (b) are not particularly limited, and, for example, flat pressing may be used.

In step (b), the sheet resulting from step (a) is processed, and the pressing process may be performed, for instance, on a single-body sheet, a multilayer body formed of a carrier film, a sheet, and a metal portion, or a multilayer body formed of a metal portion and a sheet. The production method of the present invention is a method that provides excellent adhesion and is, therefore, suitable as a production method including performing a pressing process on a multilayer body including a metal portion and a sheet.

In step (b), the pressing temperature is 70°C or greater and 250°C or less. The pressing temperature is preferably greater than or equal to 75°C and more preferably greater than or equal to 80°C and is preferably less than or equal to 240°C, more preferably less than or equal to 230°C, and even more preferably less than or equal to 220°C. When the pressing temperature is within any of these ranges, the resulting resin composition layer tends to have a high modulus of elasticity and high adhesion and heat resistance.

In step (b), the pressing pressure is 3 MPa or greater and 100 MPa or less. The pressing pressure is preferably greater than or equal to 3.5 MPa and more preferably greater than or equal to 4 MPa. When the pressure is within any of these ranges, the resulting resin composition layer tends to have excellent withstand voltage, thermal conductivity, and adhesion.

The time for the pressing process of step (b) is not particularly limited. The time is preferably greater than or equal to 5 minutes and more preferably greater than or equal to 10 minutes and is preferably less than or equal to 24 hours. It is preferable that the time for the pressing process be a time such that a degree of conversion (B) of the thermosetting resin, which will be described below, becomes greater than or equal to 60%.

The thermosetting resin present in the sheet after step (b) has a degree of conversion (which may be hereinafter referred to as the "degree of conversion (B)") that is not particularly limited and is preferably greater than or equal to 60%, more preferably greater than or equal to 70%, even more preferably greater than or equal to 80%, and particularly preferably greater than or equal to 80%. The upper limit of the degree of conversion (B) is 100%, which is not a particular limitation. When the degree of conversion (B) of the thermosetting resin is within any of the above-mentioned ranges, sufficient curing is achieved, and, consequently, the resulting resin composition layer tends to have excellent heat resistance and adhesion.

The degree of conversion (B) of the thermosetting resin in the sheet is determined as follows. Differential scanning calorimetry (DSC) is performed on the sheet before step (a) and after step (b) by heating the sheet from 40°C to 250°C at 10°C/min to determine heat generation amounts of the exothermic peak, and a calculation is performed according to the following equation by using the heat generation amounts.

Degree of conversion (B) (%) = (1 - (heat generation amount after step (b)/heat generation amount before step (a)) $\times$ 100

The resin composition layer after step (b) has a film thickness (Fb) that is not particularly limited. The film thickness is preferably greater than or equal to 10 $\mu$m, more preferably greater than or equal to 20 $\mu$m, and even more preferably greater than or equal to 30 $\mu$m and is preferably less than or equal to 1000 $\mu$m and more preferably less than or equal to 800 $\mu$m. When the film thickness (Fb) of the resin composition layer is greater than or equal to any of the lower limits, insulating properties tend to be achieved. When the film thickness (Fb) is less than or equal to any of the upper limits, thermal resistance tends to be reduced.

<Combination of Step (a) and Step (b)>

The pressing conditions and the film thicknesses of the sheet and the resin composition layer of step (a) and step (b) are not particularly limited as long as the above-mentioned ranges are satisfied. In particular, the combinations described below are preferable.

Regarding the pressing temperature, it is preferable that Tb > Ta, and 30°C $\leq$ Tb - Ta $\leq$ 220°C, where Tb (°C) is the pressing temperature of step (b), and Ta (°C) is the pressing temperature of step (a).

Tb - Ta is preferably greater than or equal to 30°C and more preferably greater than or equal to 40°C and is preferably less than or equal to 220°C, more preferably less than or equal to 200°C, and even more preferably less than or equal to 180°C. When Tb - Ta is within any of the above-mentioned ranges, ease of handling of the sheet and adhesion of the resin composition layer tend to be both achieved.

Regarding the pressing pressure, Pa > Pb, and Pa/Pb is 1.5 or greater and 50 or less, where Pb (MPa) is the pressing pressure of step (b), and Pa (MPa) is the pressing pressure of step (a).

Pa/Pb is greater than or equal to 1.5, preferably greater than or equal to 1.8, and more preferably greater than or equal to 2 and is less than or equal to 50, preferably less than or equal to 45, and more preferably less than or equal to 40. When Pa/Pb is within any of the above-mentioned ranges, voids can be reduced in the resin composition layer, the shape of the agglomerated inorganic filler is appropriately maintained, and, consequently, the resulting resin composition layer has excellent withstand voltage and thermal conductivity.

Regarding the film thicknesses of the resin composition layer and the sheet, it is preferable that a ratio (Fb/Fa) be 0.7 or greater and 1.2 or less, where Fb is the film thickness of the resin composition layer after step (b), and Fa is the film thickness of the sheet after step (a).

Fb/Fa is preferably greater than or equal to 0.7, more preferably greater than or equal to 0.8, and even more preferably greater than or equal to 0.85 and is preferably less than or equal to 1.2 and more preferably less than or equal to 1.1.

Fb/Fa satisfying any of the above-mentioned ranges indicates that the sheet after step (a) has an effectively reduced number of voids, and the difference in the film thickness between before and after step (b) is small, and, accordingly, the resulting resin composition layer tends to have excellent withstand voltage and thermal conductivity.

In the present invention, it is particularly preferable that step (a) be a step in which a sheet is formed with the resin composition of the present invention on a carrier film, and a pressing process is performed on the sheet, with the carrier film remaining thereon, and that step (b) be a step in which a pressing process is performed on a multilayer body including the sheet resulting from step (a) and a metal portion, in a state in which the sheet is in contact with the metal portion.

[Thermal Conductivity and Withstand Voltage of Resin Composition Layer]

The thermal conductivity and the withstand voltage of the resin composition layer of the present invention are not particularly limited. The thermal conductivity is preferably greater than or equal to 8 W/mK, more preferably greater than or equal to 9 W/mK, and even more preferably greater than or equal to 10 W/mK.

The withstand voltage of the resin composition layer of the present invention is preferably greater than or equal to 30 kV/mm, more preferably greater than or equal to 35 kV/mm, and particularly preferably greater than or equal to 40 kV/mm.

In the present invention, methods for measuring the thermal conductivity and the withstand voltage are not particularly limited, and examples of the methods include the methods described later in the Examples section.

[Composite Molded Article]

The composite molded article of the present invention is an article in which the resin composition layer of the present invention and a metal portion are integrally stacked on each other. The metal portion may be provided on only one surface of the resin composition layer of the present invention or on two or more surfaces thereof. For example, the metal portion may be present only on one surface of the resin composition layer, or the metal portion may be present on both surfaces thereof. Furthermore, the metal portion may be a patterned portion.

The composite molded article of the present invention can be produced as follows: for example, the metal portion is used as a substrate (carrier film), the resin composition of the present invention is applied onto the substrate to form a shape of a sheet, and the pressing of step (a) and step (b), described above, is performed thereon. In step (b), a different metal plate may be stacked to produce a composite molded article having metal portions on both surfaces.

Furthermore, the composite molded article of the present invention can be produced as follows: the resin composition having a sheet shape formed on a substrate (carrier film) different from the metal portion is removed from the carrier film after step (a) and stacked on a metal member that forms the metal portion, and then, the pressing of step (b) is performed.

In this instance, a similar process to that described above may be used except that the resin composition is coated onto a carrier film such as a PET film that may have been treated with a release agent; the resin composition of the present invention having a sheet shape may be removed from the carrier film after step (a), thereafter, the resin composition having a sheet shape may be placed on a different metal plate or held between two metal plates, and, in this state, the pressing of step (b) may be performed to carry out the integration.

The metal plate may be a metal plate formed of, for instance, copper, aluminum, a nickel-plated metal and having a thickness of approximately 10 $\mu$m to 10 cm. The metal plate may have a physically roughened surface or a surface chemically treated with a surface treatment agent or the like. From the standpoint of adhesion between the resin composition layer and the metal plate, it is more preferable that the surface have been treated by any of these treatments.

[Semiconductor Device]

The composite molded article of the present invention can be used as a semiconductor device. In particular, the composite molded article can be effectively used in a power semiconductor device that can be a high-power and high-density device when operated at a high temperature.

EXAMPLES

The present invention will now be described in more detail with reference to examples. The present invention is not limited to the following examples as long as the present invention does not depart from the gist thereof.

The values of the various conditions and the evaluation results of the examples described below indicate preferred ranges of the present invention, as with the preferred ranges of the embodiments of the present invention. Preferred ranges of the present invention can be determined taking into account ranges indicated by the preferred ranges of the embodiments described above and the values of the examples described below or by combinations of the values of examples.

[Raw Materials]

The raw materials used in Examples and Comparative Examples are as follows.

<Thermosetting Resin>

Resin component 1: epoxy resin produced in accordance with the method for producing an epoxy resin disclosed in Examples of JP 2006-176658 A

Polystyrene equivalent weight average molecular weight: 30,000
Epoxy equivalent weight: 9,000 g/eq

Resin component 2: bisphenol A-type liquid epoxy resin, weight average molecular weight: 600 or less
Resin component 3: biphenyl-type solid epoxy resin, weight average molecular weight: 600 or less
Resin component 4: non-aromatic polyfunctional epoxy resin having a structure that contains at least four glycidyl groups per molecule, weight average molecular weight: 600 or less

<Agglomerated Inorganic Filler>

Inorganic filler 1: agglomerated boron nitride particles having a card-house structure produced in accordance with the method for producing agglomerated boron nitride particles disclosed in Examples of WO 2015/561028 A1

New Mohs hardness: 2
Volume average particle size: 45 $\mu$m

<Other Fillers>

Inorganic filler 2: spherical alumina particles, manufactured by Admatechs Company Limited

New Mohs hardness: 9
Volume average particle size: 6.5 $\mu$m
Thermal conductivity: 20 to 30 W/m·K

<Curing Agent>

Curing agent 1: MEH-8000H, manufactured by Meiwa Plastic Industries, Ltd.
Phenolic resin-based curing agent

<Curing Catalyst Component>

Curing catalyst 1: Curezol 2E4MZ-A, manufactured by Shikoku Chemicals Corporation
Curing catalyst 2: Curezol 2PHZ-PW, manufactured by Shikoku Chemicals Corporation

[Measurement Methods]

<Degrees of Conversion of Thermosetting Resin>

The degrees of conversion were determined as follows. Differential scanning calorimetry (DSC) was performed on the formed sheet before and/or after step (a) and step (b) (the sheet after step (b) is the resin composition layer) by heating the sheet from 40°C to 250°C at 10°C/min to determine heat generation amounts of the exothermic peak, and a calculation was performed according to the following equation by using the heat generation amounts.

Degree of conversion (A) (%) in step (a) = (1 - (heat generation amount after step (a)/heat generation amount before step (a)) $\times$ 100

Degree of conversion (B) (%) in step (b) = (1 - (heat generation amount after step (b)/heat generation amount before step (a)) $\times$ 100

<Thermal Conductivity of Resin Composition Layer in Thickness Direction>

The thermal resistance value of resin composition layers having different thicknesses, which had the same composition and were prepared under the same conditions, was measured with a thermal resistance measuring device (T3Ster (product name), manufactured by Mentor Graphics Corp.). From the slope of a graph obtained by plotting the thermal resistance value against the thickness, the thermal conductivity was determined.

<Withstand Voltage of Resin Composition Layer>

The voltage at which the resin composition layer was broken was determined by increasing the voltage applied to the resin composition layer by 500 V per minute in an insulating oil. From the value of the determined breakdown voltage, a breakdown voltage per mm of the film thickness was calculated and determined as the value of the withstand voltage (kV/mm).

<Test of Ease of Handling of Sheet (mandrel test)>

The sheet having a carrier film after step (a) was subjected to a bend test according to JIS K 5600-5-1, at 24°C with the carrier film being positioned inside. The bend test was performed at 180° with an 8-mm diameter mandrel. Sheets that had cracks and/or peelings were given a rating of "$\times$", and sheets that had no cracks or peelings were given a rating of "$\bigcirc$", as determined visually.

[Example 1]

A mixture was prepared by mixing together the resin component 1, the resin component 2, the resin component 4, the curing agent 1, the curing catalyst 1, the inorganic filler 1, and the inorganic filler 2 in a planetary centrifugal mixer in a manner such that the mass ratio shown in "Composition A" of Table 1 below was achieved. In the preparation of the mixture, methyl ethyl ketone and cyclohexanone were used, each in an amount of 18.5 mass%, to prepare a resin composition in the form of a slurry such that the amount of the mixture in the coating slurry was 63 mass% (solids concentration).

The obtained resin composition in the form of a slurry was coated onto a PET film with a doctor blade process and then dried by heating at 60°C for 120 minutes. Subsequently, step (a) was performed, in which a pressure was applied to the resin composition with the PET film remaining thereon, at 50°C and 147 MPa for 10 minutes, by using a flat press machine. Accordingly, a sheet having a thickness of 150 $\mu$m was obtained. The total content of the methyl ethyl ketone and the cyclohexanone in the sheet was less than or equal to 1 mass% (the solids concentration was greater than or equal to 99 mass%).

The degree of conversion (A) of the thermosetting resin in the sheet after step (a) was less than 10%.

A substrate made of copper was stacked on the sheet resulting from step (a), and subsequently, step (b) was performed, in which curing was carried out at 175°C and 9.8 MPa for 30 minutes, to produce the resin composition layer. The thickness of the resin composition layer was 141 $\mu$m, and the ratio of the film thickness after step (b) to the film thickness after step (a) (Fb/Fa) was 0.94. The results of the evaluation of the ease of handling of the sheet (mandrel test) are shown in Table 2A.

The degree of conversion (B) of the thermosetting resin in the resin composition layer after step (b) was greater than or equal to 90%, and the withstand voltage of the resin composition layer was 53 kV/mm.

The measurement of the thermal conductivity of the resin composition layer of Example 1 was performed on the following samples, which had the same composition and underwent the same steps (a) and (b).

The resin composition after step (a) that had a sheet shape was held between PET films, and the resultant was cured at a specified pressure and temperature of step (b) to produce the resin composition layer.

Furthermore, in a similar manner, samples were prepared by removing, from the sheet after step (a), the carrier film and then stacking a plurality of the sheets; specifically, a sample with two sheets, a sample with three sheets, and a sample with four sheets were prepared. Each of the samples was held between PET films and was processed at a specified pressure and temperature of step (b). In this manner, four types of resin composition layers having different thicknesses were obtained. The thermal conductivity of the resin composition layers was measured with the method described above and determined to be 15 W/m·K.

The results are summarized in Table 2A.

<Examples 2 to 6 and Comparative Examples 1 to 7

In accordance with the methods of Example 1, resin compositions having the composition A or B shown in Table 1 were prepared, and the processes were performed thereon with the pressing conditions and the pressing method shown in Tables 2A and 2B. The results are summarized in Tables 2A and 2B.

[Table 1]

|  | Mass ratio of mixed raw materials (parts by mass) | |
|---|---|---|
|  | Composition A | Composition B |
| Inorganic filler 1 | 205 | 217 |
| Inorganic filler 2 | 81 | 81 |
| Resin component 1 | 28 | 25 |
| Resin component 2 | 28 | - |
| Resin component 3 | - | 41 |
| Resin component 4 | 27 | 20 |
| Curing agent 1 | 30 | 14 |
| Curing catalyst 1 | 1.7 | 1 |
| Curing catalyst 2 | - | 1 |

[Table 2A]

| | | | Example 1 | Example 2 | Example 3 | Example 4 | Example 5 | Example 6 |
|---|---|---|---|---|---|---|---|---|
| | Composition of resin composition | | Composition A | Composition B | Composition B | Composition B | Composition B | Composition B |
| Pressing conditions & Pressing method | Step (a) | Pressing process | Flat pressing | Flat pressing | Isostatic pressing | Flat pressing | Flat pressing | Flat pressing |
| | | Pressing temperature (Ta) and time | 50°C, 10 min | 60°C, 10 min | 60°C, 10 min | 50°C, 10 min | 50°C, 10 min | 100°C, 10 min |
| | | Pressing pressure (Pa) | 147 MPa | 147 MPa | 147 MPa | 100 MPa | 80 MPa | 40 MPa |
| | Step (b) | Pressing temperature (Tb) and time | 175°C, 30 min | 175°C, 30 min | 175°C, 30 min | 175°C, 30 min | 175°C, 30 min | 175°C, 30 min |
| | | Pressing pressure (Pb) | 9.8 MPa | 9.8 MPa | 9.8 MPa | 9.8 MPa | 9.8 MPa | 9.8 MPa |
| | Degree of conversion (A) of thermosetting resin after step (a) | | <10% | <10% | <10% | <10% | <10% | <10% |
| | Flexibility of sheet after step (a) (mandrel test 8 mmcp) | | ○ | ○ | ○ | ○ | ○ | - |
| | Tb-Ta | | 125°C | 115°C | 115°C | 125°C | 125°C | 75°C |
| | Degree of conversion (B) of thermosetting resin after step (b) | | >90% | >90% | >90% | >90% | >90% | >90% |
| | Pa/Pb | | 15 | 15 | 15 | 10.2 | 8.2 | 2 |
| | Fb/Fa | | 0.94 | 0.96 | 0.96 | 0.94 | 0.93 | 0.92 |
| Withstand voltage (kV/mm) | | | 53 | 56 | 57 | 51 | 50 | 39 |
| Thermal conductivity (W/mK) | | | 15 | 16 | 16 | 15 | 15 | 14 |

[Table 2B]

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Composition of resin composition | | | Composition B | Composition B | Composition B | Composition B | Composition B | Composition B | Composition B |
| Pressing conditions & Pressing method | Step (a) | Pressing process | Flat pressing | Flat pressing | Flat pressing | Isostatic pressing | Flat pressing | Flat pressing | Flat pressing |
| | | Pressing temperature (Ta) and time | None | 60°C, 10 min | 60°C, 10 min | 60°C, 10 min | 100°C, 1 min | 50°C, 10 min | 130°C, 10 min |
| | | Pressing pressure (Pa) | None | 147 MPa | 147 MPa | 147 MPa | 10 MPa | 10 MPa | 40 MPa |
| | Step (b) | Pressing temperature (Tb) and time | 175°C, 30 min | 175°C, 30 min | None | None | 175°C, 30 min | 175°C, 30 min | 175°C, 30 min |
| | | Pressing pressure (Pb) | 9.8 MPa | 2 MPa | None | None | 9.8 MPa | 9.8 MPa | 9.8 MPa |
| | Degree of conversion (A) of thermosetting resin after step (a) | | <10% | <10% | <10% | <10% | <10% | <10% | >10% |
| | Flexibility of sheet after step (a) (mandrel test 8 mmφ) | | × | ○ | ○ | ○ | × | × | × |
| | Tb-Ta | | - | 115°C | - | - | 75°C | 125°C | 45°C |
| | Degree of conversion (B) of thermosetting resin after step (b) | | >90% | >90% | - | - | >90% | >90% | >90% |
| | Pa/Pb | | - | 73.5 | - | - | 1.02 | 1.02 | 4.08 |
| | Fb/Fa | | 0.65 | 0.98 | 1 | 1 | 0.99 | 1.02 | - |
| Withstand voltage (kV/mm) | | | 12 | 21 | 24 | 27 | 18 | 20 | Film did not adhere to copper plate. |
| Thermal conductivity (W/mK) | | | - | - | - | - | - | - | - |

From Tables 2A and 2B, it is apparent that resin composition layers having good withstand voltage and thermal conductivity can be obtained by performing the processes at a specified pressure and temperature in step (a) and step (b) in accordance with the present invention.

**Claims**

1.   A method for producing a resin composition layer, the resin composition layer being formed of a resin composition that includes an agglomerated inorganic filler and a thermosetting resin, wherein the agglomerated inorganic filler includes an agglomerated boron nitride filler, the method comprising step (a) and step (b), described below:

  (a) a step in which a pressing process is performed on a carrier film and a sheet formed with the resin composition on the carrier film, under conditions including a pressing temperature of 0°C or greater and 110°C or less and a pressing pressure Pa (MPa) of 40 MPa or greater and 1000 MPa or less; and
  (b) a step in which a pressing process is performed on the sheet resulting from step (a), under conditions including a pressing temperature of 70°C or greater and 250°C or less and a pressing pressure Pb (MPa) of 3 MPa or greater and 100 MPa or less, to produce the resin composition layer,

  wherein Pa > Pb, and Pa/Pb is 1.5 or greater and 50 or less.

2.   The method for producing a resin composition layer according to Claim 1, wherein a degree of conversion of the thermosetting resin in the sheet after step (a) (referred to as a "degree of conversion (A)") is less than 50% as determined by the following method:
  <Method for measuring and calculating degree of conversion (A) >
  Differential scanning calorimetry (DSC) is performed on the sheet before and after step (a) by heating the sheet from 40°C to 250°C at 10°C/min to determine heat generation amounts of an exothermic peak, and a calculation is performed according to the following equation by using the heat generation amounts.

  Degree of conversion (A) (%) = (1 - (heat generation amount after step (a)/heat generation amount before step (a)) × 100

3.   The method for producing a resin composition layer according to Claim 1 or 2, wherein Tb > Ta, and 30°C ≤ Tb - Ta ≤ 220°C, where Tb (°C) is the pressing temperature of step (b), and Ta (°C) is the pressing temperature of step (a).

4.   The method for producing a resin composition layer according to any one of Claims 1 to 3, wherein a degree of conversion of the thermosetting resin in the sheet after step (b) (referred to as a "degree of conversion (B)") is greater than or equal to 60% as determined by the following method:
  <Method for measuring and calculating degree of conversion (B) >
  Differential scanning calorimetry (DSC) is performed on the sheet before step (a) and after step (b) by heating the sheet from 40°C to 250°C at 10°C/min to determine heat generation amounts of an exothermic peak, and a calculation is performed according to the following equation by using the heat generation amounts.

  Degree of conversion (B) (%) = (1 - (heat generation amount after step (b)/heat generation amount before step (a)) × 100

5.   The method for producing a resin composition layer according to any one of Claims 1 to 4, wherein Fb/Fa is 0.7 or greater and 1.2 or less, where Fb is a film thickness after step (b), and Fa is a film thickness after step (a).

6.   The method for producing a resin composition layer according to any one of Claims 1 to 5, wherein the pressing process of step (a) is a flat pressing process.

7.   The method for producing a resin composition layer according to any one of Claims 1 to 5, wherein the pressing process of step (a) is a roll pressing process.

8.   The method for producing a resin composition layer according to any one of Claims 1 to **5,** wherein the pressing process of step (a) is an isostatic pressing process.

9. The method for producing a resin composition layer according to any one of Claims 1 to 8, wherein the thermosetting resin includes an epoxy compound.

10. The method for producing a resin composition layer according to Claim 9, wherein the thermosetting resin includes an epoxy compound having a weight average molecular weight of greater than or equal to 10,000 and an epoxy compound having a weight average molecular weight of less than or equal to 600.

11. The method for producing a resin composition layer according to Claim 9 or 10, wherein the thermosetting resin includes an epoxy compound having a weight average molecular weight of less than or equal to 600 and containing at least three epoxy groups in a molecule.

12. The method for producing a resin composition layer according to any one of Claims 1 to 11, wherein the agglomerated boron nitride filler has a card-house structure.

13. A method for producing a composite molded article, the method being a method for producing a composite molded article including a resin composition layer and a metal portion, the method comprising forming the resin composition layer in accordance with the method for producing a resin composition layer according to any one of Claims 1 to 12.

**Patentansprüche**

1. Verfahren zur Herstellung einer Harzzusammensetzungsschicht, wobei die Harzzusammensetzungsschicht aus einer Harzzusammensetzung gebildet ist, die einen agglomerierten anorganischen Füllstoff und ein duroplastisches Harz enthält, wobei der agglomerierte anorganische Füllstoff einen agglomerierten Bornitrid-Füllstoff enthält, wobei das Verfahren die Schritte (a) und (b), wie unten beschrieben, umfasst:

(a) einen Schritt, in dem ein Pressvorgang an einer Trägerfolie und einer mit der Harzzusammensetzung auf der Trägerfolie gebildeten Schicht unter Bedingungen durchgeführt wird, die eine Presstemperatur von 0 °C oder mehr und 110 °C oder weniger und einen Pressdruck Pa (MPa) von 40 MPa oder mehr und 1000 MPa oder weniger enthalten; und
(b) einen Schritt, in dem ein Pressvorgang an der aus Schritt (a) resultierenden Schicht unter Bedingungen durchgeführt wird, die eine Presstemperatur von 70 °C oder mehr und 250 °C oder weniger und einen Pressdruck Pb (MPa) von 3 MPa oder mehr und 100 MPa oder weniger enthalten, um die Harzzusammensetzungsschicht herzustellen,

wobei Pa > Pb ist, und Pa/Pb 1,5 oder größer und 50 oder kleiner ist.

2. Verfahren zur Herstellung einer Harzzusammensetzungsschicht gemäß Anspruch 1, wobei ein Umwandlungsgrad des duroplastischen Harzes in der Schicht nach Schritt (a) (bezeichnet als "Umwandlungsgrad (A)") weniger als 50 % beträgt, wie durch das folgende Verfahren bestimmt:
<Verfahren zum Messen und Berechnen des Umwandlungsgrades (A) >
Differential-Scanning-Kalorimetrie (DSC) wird an der Schicht vor und nach Schritt (a) durchgeführt, indem die Schicht mit 10 °C/min von 40 °C auf 250 °C erwärmt wird, um Wärmeerzeugungsmengen eines exothermen Peaks zu bestimmen, und es wird unter Verwendung der Wärmeerzeugungsmengen eine Berechnung gemäß der folgenden Gleichung durchgeführt.

Umwandlungsgrad (A) (%) = (1 - (Wärmeerzeugungsmenge nach Schritt (a)/Wärmeerzeugungsmenge vor Schritt (a)) x 100

3. Verfahren zur Herstellung einer Harzzusammensetzungsschicht gemäß Anspruch 1 oder 2, wobei Tb > Ta und 30 °C ≤ Tb - Ta ≤ 220 °C, wobei Tb (°C) die Presstemperatur von Schritt (b) und Ta (°C) die Presstemperatur von Schritt (a) ist.

4. Verfahren zur Herstellung einer Harzzusammensetzungsschicht gemäß mindestens einem der Ansprüche 1 bis 3, wobei ein Umwandlungsgrad des duroplastischen Harzes in der Schicht nach Schritt (b) (bezeichnet als "Umwandlungsgrad (B)") größer als oder gleich 60 % beträgt, wie durch das folgende Verfahren bestimmt:
<Verfahren zum Messen und Berechnen des Umwandlungsgrades (B) >
Differential-Scanning-Kalorimetrie (DSC) wird an der Schicht vor Schritt (a) und nach Schritt (b) durchgeführt, indem die Schicht mit 10 °C/min von 40 °C auf 250 °C erwärmt wird, um Wärmeerzeugungsmengen eines exothermen Peaks zu bestimmen, und es wird unter Verwendung der Wärmeerzeugungsmengen eine Berechnung gemäß der folgenden Gleichung durchgeführt.

Umwandlungsgrad (B) (%) = (1 - (Wärmeerzeugungsmenge nach Schritt (b) / Wärmeerzeugungsmenge vor Schritt (a)) x 100

5. Verfahren zur Herstellung einer Harzzusammensetzungsschicht gemäß mindestens einem der Ansprüche 1 bis 4, wobei Fb/Fa 0,7 oder größer und 1,2 oder kleiner ist, wobei Fb die Filmdicke nach Schritt (b) und Fa die Filmdicke nach Schritt (a) ist.

6. Verfahren zur Herstellung einer Harzzusammensetzungsschicht gemäß mindestens einem der Ansprüche 1 bis 5, wobei der Pressvorgang von Schritt (a) ein Flachpressvorgang ist.

7. Verfahren zur Herstellung einer Harzzusammensetzungsschicht gemäß mindestens einem der Ansprüche 1 bis 5, wobei der Pressvorgang von Schritt (a) ein Walzenpressvorgang ist.

8. Verfahren zur Herstellung einer Harzzusammensetzungsschicht gemäß mindestens einem der Ansprüche 1 bis 5, wobei der Pressvorgang von Schritt (a) ein isostatischer Pressvorgang ist.

9. Verfahren zur Herstellung einer Harzzusammensetzungsschicht gemäß mindestens einem der Ansprüche 1 bis 8, wobei das duroplastische Harz eine Epoxidverbindung enthält.

10. Verfahren zur Herstellung einer Harzzusammensetzungsschicht gemäß Anspruch 9, wobei das duroplastische Harz eine Epoxidverbindung mit einem gewichtsmittleren Molekulargewicht von größer als oder gleich 10.000 und eine Epoxidverbindung mit einem gewichtsmittleren Molekulargewicht von kleiner als oder gleich 600 enthält.

11. Verfahren zur Herstellung einer Harzzusammensetzungsschicht gemäß Anspruch 9 oder 10, wobei das duroplastische Harz eine Epoxidverbindung mit einem gewichtsmittleren Molekulargewicht von weniger als oder gleich 600 enthält und mindestens drei Epoxidgruppen in einem Molekül enthält.

12. Verfahren zur Herstellung einer Harzzusammensetzungsschicht gemäß mindestens einem der Ansprüche 1 bis 11, wobei der agglomerierte Bornitrid-Füllstoff eine Kartenhausstruktur aufweist.

13. Verfahren zur Herstellung eines Verbundformteils, wobei das Verfahren ein Verfahren zur Herstellung eines Verbundformteils ist, das eine Harzzusammensetzungsschicht und ein Metallteil enthält, wobei das Verfahren das Bilden der Harzzusammensetzungsschicht gemäß dem Verfahren zur Herstellung einer Harzzusammensetzungsschicht gemäß mindestens einem der Ansprüche 1 bis 12 umfasst.

**Revendications**

1. Procédé pour la production d'une couche de composition de résine, la couche de composition de résine étant formée d'une composition de résine qui inclut une charge inorganique agglomérée et une résine thermodurcissable, dans lequel la charge inorganique agglomérée inclut une charge en nitrure de bore agglomérée, le procédé comprenant l'étape (a) et l'étape (b), décrites ci-dessous :

(a) une étape au cours de laquelle un processus de presse est réalisé sur un film support et une feuille formée avec la composition de résine sur le film support, dans des conditions incluant une température de presse supérieure ou égale à 0 °C et inférieure ou égale à 110 °C, et une pression de presse Pa (MPa) supérieure ou égale à 40 MPa et inférieure ou égale à 1 000 MPa ; et
(b) une étape au cours de laquelle un processus de presse est réalisé sur la feuille résultant de l'étape (a), dans des conditions incluant une température de presse supérieure ou égale à 70 °C et inférieure ou égale à 250 °C, et une pression de presse Pb (MPa) supérieure ou égale à 3 MPa et inférieure ou égale à 100 MPa, afin de produire la couche de composition de résine,

dans lequel Pa > Pb, et Pa/Pb est supérieur ou égal à 1,5 et inférieur ou égal à 50.

2. Procédé pour la production d'une couche de composition de résine selon la revendication 1, dans lequel un degré de conversion de la résine thermodurcissable dans la feuille après l'étape (a) (appelé « degré de conversion (A) ») est inférieur à 50 % tel que déterminé par le procédé suivant :
<Procédé de mesure et de calcul du degré de conversion (A)>
L'analyse calorimétrique différentielle (DSC) est réalisée sur la feuille avant et après l'étape (a) en chauffant la feuille de 40 °C à 250 °C à un rythme de 10 °C/min afin de déterminer les quantités de génération de chaleur d'un pic exothermique, et un calcul est réalisé selon l'équation suivante en utilisant ces quantités de génération de chaleur.

Degré de conversion (A) (%) = (1 - (quantité de génération de chaleur après l'étape (a)/quantité de génération de chaleur avant l'étape (a)) $\times$ 100

3. Procédé pour la production d'une couche de composition de résine selon la revendication 1 ou la revendication 2, dans lequel Tb > Ta, et 30 °C ≤ Tb - Ta ≤ 220 °C, où Tb (°C) est la température de presse de l'étape (b), et Ta (°C) est la température de presse de l'étape (a).

4. Procédé pour la production d'une couche de composition de résine selon l'une quelconque des revendications 1 à 3, dans lequel un degré de conversion de la résine thermodurcissable dans la feuille après l'étape (b) (appelé « degré de conversion (B) ») est supérieur ou égal à 60 % tel que déterminé par le procédé suivant :
<Procédé de mesure et de calcul du degré de conversion (B)>
L'analyse calorimétrique différentielle (DSC) est réalisée sur la feuille avant l'étape (a) et après l'étape (b) en chauffant la feuille de 40 °C à 250 °C à un rythme de 10 °C/min afin de déterminer les quantités de génération de chaleur d'un pic exothermique, et un calcul est réalisé selon l'équation suivante en utilisant ces quantités de génération de chaleur.

Degré de conversion (B) (%) = (1 - (quantité de génération de chaleur après l'étape (b)/quantité de génération de chaleur avant l'étape (a)) $\times$ 100

5. Procédé pour la production d'une couche de composition de résine selon l'une quelconque des revendications 1 à 4, dans lequel Fb/Fa est supérieur ou égal à 0,7 et inférieur ou égal à 1,2, où Fb est une épaisseur de film après l'étape (b), et Fa est une épaisseur de film après l'étape (a).

6. Procédé pour la production d'une couche de composition de résine selon l'une quelconque des revendications 1 à 5, dans lequel le processus de presse de l'étape (a) est un processus de presse à plat.

7. Procédé pour la production d'une couche de composition de résine selon l'une quelconque des revendications 1 à 5, dans lequel le processus de presse de l'étape (a) est un processus de presse au rouleau.

8. Procédé pour la production d'une couche de composition de résine selon l'une quelconque des revendications 1 à 5, dans lequel le processus de presse de l'étape (a) est un processus de presse isostatique.

9. Procédé pour la production d'une couche de composition de résine selon l'une quelconque des revendications 1 à 8, dans lequel la résine thermodurcissable inclut un composé époxy.

10. Procédé pour la production d'une couche de composition de résine selon la revendication 9, dans lequel la résine thermodurcissable inclut un composé époxy présentant un poids moléculaire moyen en poids supérieur ou égal à 10 000 et un composé époxy présentant un poids moléculaire moyen en poids inférieur ou égal à 600.

11. Procédé pour la production d'une couche de composition de résine selon la revendication 9 ou la revendication 10, dans lequel la résine thermodurcissable inclut un composé époxy présentant un poids moléculaire moyen en poids inférieur ou égal à 600 et contenant au moins trois groupes époxy dans une molécule.

**12.** Procédé pour la production d'une couche de composition de résine selon l'une quelconque des revendications 1 à 11, dans lequel la charge de nitrure de bore agglomérée présente une structure en château de cartes.

**13.** Procédé pour la production d'un article moulé composite, le procédé étant un procédé de production d'un article moulé composite incluant une couche de composition de résine et une partie métallique, le procédé comprenant la formation de la couche de composition de résine conformément au procédé de production d'une couche de composition de résine selon l'une quelconque des revendications 1 à 12.

## REFERENCES CITED IN THE DESCRIPTION

**Patent documents cited in the description**

- JP 5679083 B
- JP 2016135730 A
- WO 2015119198 A1
- WO 2019189746 A1
- JP 2016079304 A
- JP 2006176658 A
- WO 2015561028 A1

**Non-patent literature cited in the description**

- Ceramics. The Ceramic Society of Japan, 2008, vol. 43